Europäisches Patentamt

European Patent Office

Office européen des brevets

(19)

(11) Publication number: **0 110 265**
A2

(12) **EUROPEAN PATENT APPLICATION**

(21) Application number: 83111565.4

(22) Date of filing: **18.11.83**

(51) Int. Cl.³: **B 29 D 27/00, E 04 C 2/26**

(30) Priority: **30.11.82 IT 2452082**

(43) Date of publication of application: **13.06.84**
**Bulletin 84/24**

(84) Designated Contracting States: **CH DE FR GB LI**

(71) Applicant: **METECNO S.p.A., Via Per Cassino, 15, I-20067 Tribiano (Milan) (IT)**

(72) Inventor: **Tognelli, Giorgio, Via per Cassino 15, I-20067 Tribiano (Milano) (IT)**

(74) Representative: **Dr. Ing. A. Racheli & C., Viale San Michele del Carso, 4, I-20144 Milano (IT)**

(54) **A process for continuously producing two-faced self-supporting sandwich panels having an interposed layer of insulating material and provided with continuous substantially rigid side joints, and panels obtained.**

(57) A process for continuously producing sandwich panels rimmed along the longitudinal edges, wherein first and second bands (10, 12) of profiled sheet or plate are continuously advanced, at same speed, said bands being designed to be the opposite major faces or sides of a continuous band (30) of produced panel, said bands (10, 12) being approached to each other as they advance to a predetermined distance from each other and then maintaining said predetermined distance from each other; between the two approaching bands a chemical product is introduced and then expanded and the bands are advanced within a movable press (20) to cause the panel band to have a controlled thickness; the process further comprises the steps of simultaneously advancing at a same speed as said first and second bands, side joint strips (14, 16) converging to the longitudinal edges of said first and second bands; and respectively engaging said side strips with said first and/or second bands on either sides thereof.

Applicant:

METECNO S.p.A.

Via per Cassino, 15

20067 TRIBIANO (Milan) Italy

"A PROCESS FOR CONTINUOUSLY PRODUCING TWO-FACED SELF-SUPPORTING
SANDWICH PANELS HAVING AN INTERPOSED LAYER OF INSULATING MATERIAL
AND PROVIDED WITH CONTINUOUS SUBSTANTIALLY RIGID SIDE JOINTS; AND
PANELS OBTAINED"

This patent application is concerned with the field of panels for
light prefabrication, particularly so-called "sandwich" panels of
self-bearing or self-supporting type, said panels comprising two
faces or sides of profiled metal sheet or plate, with an
interposed layer of insulating material, generally foamed
plastics material. Generally, panels of this type are used for
carrying out walls or coverings or roofings.

It is a well known technique to produce such panels by a
continuous process: first and second sheet or plate bands are
continuously advanced through profiling stations for giving the desired cross-sectional shape thereto; then, the advancing profiled bands are approached to each other until they have a desired spacing there between and an expandable chemical product is introduced into the gap therebetween; generally, both of said bands are preheated to improve foaming of the chemical product; then the profiled bands and expandable chemical product are caused to pass through a movable press, generally comprising a double shaping belt; a continuous band of sandwich panel is delivered therefrom; a cutting station then provides to cut individual panels from the band.

The panels thus obtained, as at present commercially available, have two side edges only covered with thin flexible adhesive tapes which are applied during the panel manufacturing step.

However, this known technique has several disadvantages. During the necessary panel handlings, the unprotected edges are liable to be impaired by impacts, with resulting deformation of the sheet or plate edges and removal of some foamed material. A further disadvantage is that panel ageing just arises at the unprotected edges, where chalking, rottenness or attack of insects to the foamed material between the sheets or plates would more easily start. Further disadvantages consist of faulty sealing at the joints and unsatisfactory aesthetical appearance.

Panels have been proposed with side closing strips; such panels are provided by a discontinuous process. However, such panels would involve higher production times and costs.

In order to overcome all of the disadvantages of the prior art as hitherto mentioned, a process has been conceived for continuously providing sandwich panels rimmed along the longitudinal edges, according to the present invention, which process substantially comprises, in addition to the known steps of:

continuously advancing first and second bands of profiled sheet or plate designed to be the opposite major sides or faces of a continuous band of sandwich panel, simultaneously approaching said sheet or plate bands to each other to have a predetermined distance from each other and then maintaining said predetermined distance from each other;

introducing an expandable chemical product between the two sheet or plate bands at a position proximate to that where such bands are approached to said predetermined distance;

causing the expansion or foaming of the chemical product;

causing the final shaping of a continuous panel band in a movable press; moving together with the panel band;

the novel step of:

advancing, simultaneously with the continuous advancement of said first and second bands and at the same speed thereof, first and second side strips simultaneously approaching the same on the free opposite longitudinal sides of said first and second bands and guiding them to engagement with said first and second bands.

The continuously supplied side strips may have various shapes in section and may be made of various materials. Strips are provided of extruded or molded plastics material, having a C-shaped cross-section, or a C-shape cross-section with one branch of the C extended and comprising a step. A further shape provided for a side strip would comprise a segment, having one leg extending from one side for engagement with the foamed material and on the other side a flexible resilient seal or gasket. A further strip would comprise a pair of arms extended form opposite sides and a connecting portion between the arms and finally a third arm cooperating with one of said arms for resiliently engaging one end of the sheet or plate band.

This patent application also relates to panels as provided by the above process and particularly a panel comprising opposite major faces or sides of profiled sheet or plate, a filling of foamed material, and opposite side strips, of which one has a C-shape, with the C ends engaged within folded up longitudinal borders of said faces or sides, while the other strip is in form of a segment which is oriented according to the panel thickness, and has at least one leg extended inwardly of the panel and a resiliently squeezable longitudinal projection.

Another panel would comprise opposite major faces or sides of profiled sheet or plate, a filler or filling, a side band having a C-shape with one branch of C extended in a step-like form and the C ends engaged in folded up longitudinal borders lips of said faces or plates and another strip having the shape of a segment oriented according the panel thickness and having at least one engagement leg extended inwardly of the panel, and an arcuate section gasket which is resiliently squeezable and extended outwardly of the panel.

This invention is also concerned with a panel comprising two major faces or sides of profiled sheet or plate, a filler of foamed material, and two side strips, one of which comprises a strap of spongy material with a longitudinal edge inserted in a turned over portion of one of said faces or sides and the other longitudinal edge bearing against a longitudinal portion of the other face or side, while the other side strip has two opposite arms connected by a skew transverse portion and a third resilient arm and engages with one arm under a folded up lip of one of said faces or sides and with the other arm and said resilient arm against a longitudinal border of the other face or side.

According to the novel process sandwich type panels having protected longitudinal sides preset for easy effective junction there between can be produced in a continuous way and at a reduced cost.

The panels obtained according to such a process would exhibit improved characteristics of tearing or disjunction resistance at the metal faces or sides, particularly at the side edges. This would facilitate all of manual handling operations during various production steps, loading, unloading and panel assembling, remarkably reducing the possibilities that the sheet or plate faces can be inadvertedly separated from the foamed insulating material. Said panels also exhibit a good protection of the foamed insulating material against impacts, abrasions and other mechanical actions tending to damage the closed cell structure of the insulating material. A further advantage is that the thermal conductivity coefficient of the foamed insulating material is prolonged due to the reduction in diffusion in outward direction of gas contained within the cell structure of such an insulating material. A still further advantage is the improved protection of the foamed insulating material against absorption of atmospheric moisture with resulting advantages in dimensional stability, rottenness and insect attack resistance. Moreover, a very good aesthetical appearance is obtained along all the side edges of the panels and assembling of the panels is made easier, since the side joints have constant and reproducible dimensional characteristics, as provided by the rigid section thereof. Further, improved sealing results are provided at the joints between panels and time saving is provided during installation, due to the flexible gasket applied at manufacturing step.

A more detailed description of the invention will now be given with reference to the accompanying drawings, in which:

Fig. 1 is a schematic perspective view showing various steps of the production process;

Fig. 2 is a schematic elevational view corresponding to Fig. 1 with some parts removed,

Fig. 3 is a schematic plan view corresponding to Fig. 1;

Fig. 4 is a partially broken away sectional view through a first type of panel produced by the process;

Fig. 5 is a view of approached ends of two panels as those shown in Fig. 4, prior to junction thereof;

Fig. 6 is a view of the panels shown in Fig. 5, but at jointed state;

Fig. 7 is a broken away sectional view through a second type of panel as produced by the process;

Fig. 8 is a sectional view of approached ends of two panels as shown in Fig. 7, prior to junction thereof;

Fig. 9 is a sectional view showing the two panels of Fig. 8 at jointed state;

Fig.10 is a broken away sectional view through a third type of panel as produced by the process;

Fig.11 is a sectional view of approached ends for two panels as those shown in Fig. 10;

Fig.12 is a sectional view of the panels of Fig. 11 at jointed state;

Fig.13 is a schematic top view similar to Fig. 3, but with a portion of the upper band removed, showing the process for incorporating a C-shaped side strip in the panel, to provide a panel according to Figs. 4 to 6, or 8 to 10;

Figs.14 through 17 are schematic fragmentary sectional views showing the insertion of a strip in the panel face bands at subsequent steps corresponding to the locations A, B, C and D in Fig. 13; and

Fig.18 is a schematic sectional view similar to Figs. 14 to 17, showing the steps of positioning a side strip in the panel of Figs. 10 to 12.

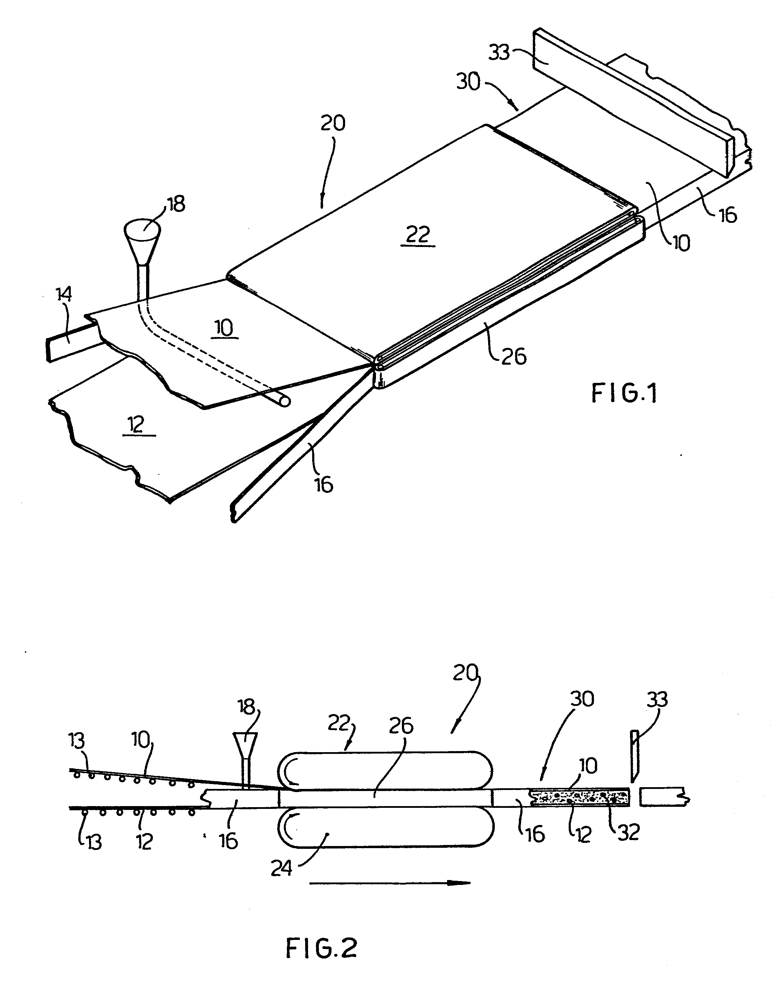

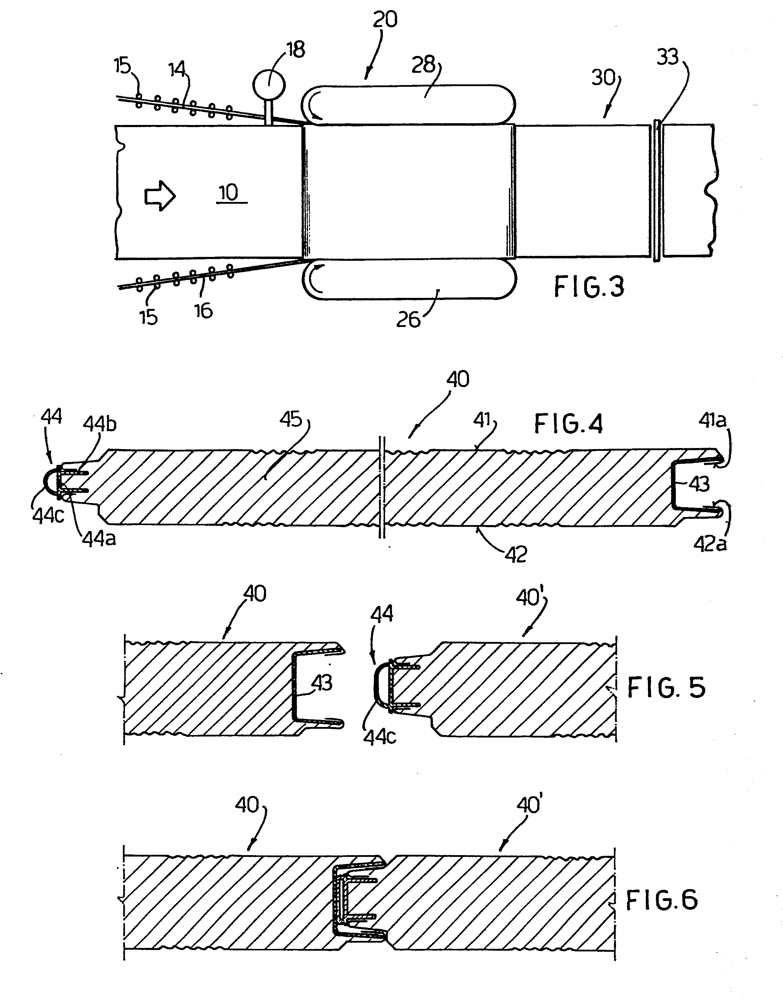

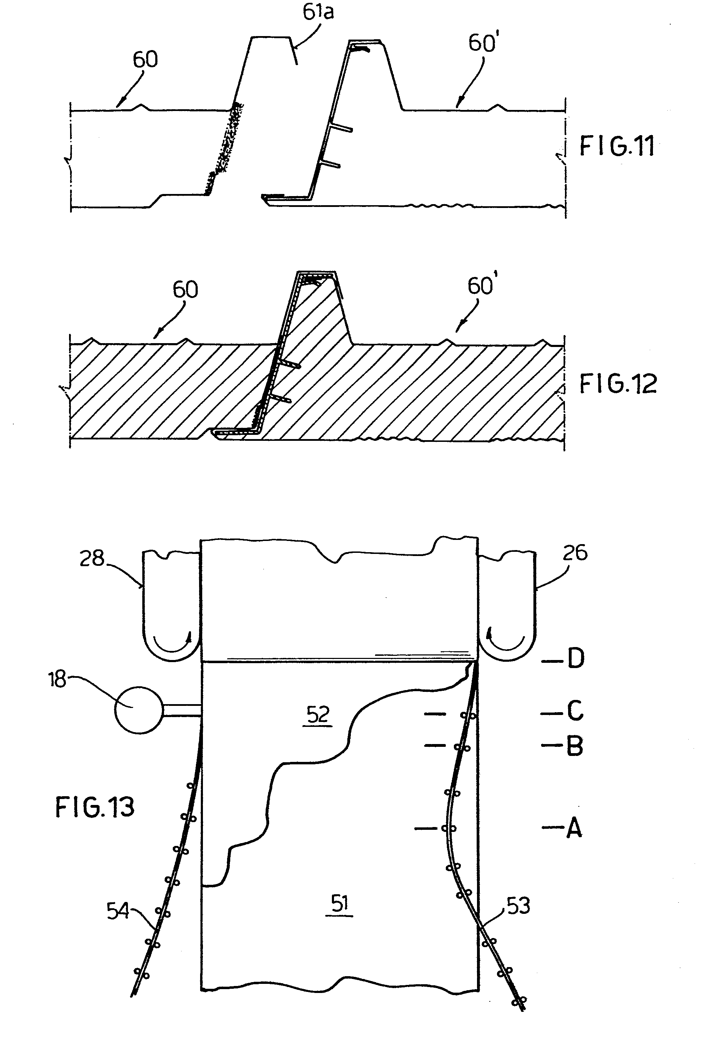

The novel process will be explained first with reference to Figs. 1 through 3 and then with reference to Fig. 13 in general terms applicable to various types of panel.

It should be appreciated that such terms as "upper", "lower" and the like are used only with reference to the figures of the accompanying drawings as shown and not in restrictive meaning of the invention.

A first band, or upper band 10 of profiled sheet or plate or the like and a second band or lower band 12 of generally profiled sheet or plate or the like (the bands are shown planar in the drawings only for simplification of the representation thereof) are continuously advanced at a same speed in the direction shown by the arrows in the drawings, converging to each other and guided by any guide means 13. A first and second side strips 14 and 16 are advanced on either side of the bands 10 and 12, converging to each other and to said bands by guides 15. Said bands 14 and 16 are also shown as plane for the sake of simplicity, but preferably are of specific shapes to be described in the following. Said bands 10, 12 and strips 14, 16 converge to form there between a defined space closed on four sides. Before the formation of said space, a station 18 introduces an expandable chemical product into the gap being formed between said strips and bands. Then the introduced chemical product is caused to expand, which expansion is generally provided by preheating of one of said strips or bands 10 or 12. At the same time, said strips and bands as combined to one another are advanced along a movable press assembly 20 comprising a pair of horizontal shaping belts, respectively named upper and lower belts, designated at 22 and 24, and a pair of vertical shaping belts 26 and 28; all of the shaping belts are movable at a same mutual speed, that is at the advancement speed of the sheet bands and side strips. Although not shown in detail, the shaping belts have a shape for matching with the respective sheet band or side strip.

At the outlet from the movable press 20, there is a continuous panel band 30 comprising an upper sheet face 10 and a lower sheet face 12, side strips 14 and 16, and a filler of foamed material 32, all of these elements being integral with one another.

At a cutting station, schematically shown at 33, the continuous panel band is then cut to the desired lengths to form individual panels rimmed on the two longitudinal sides.

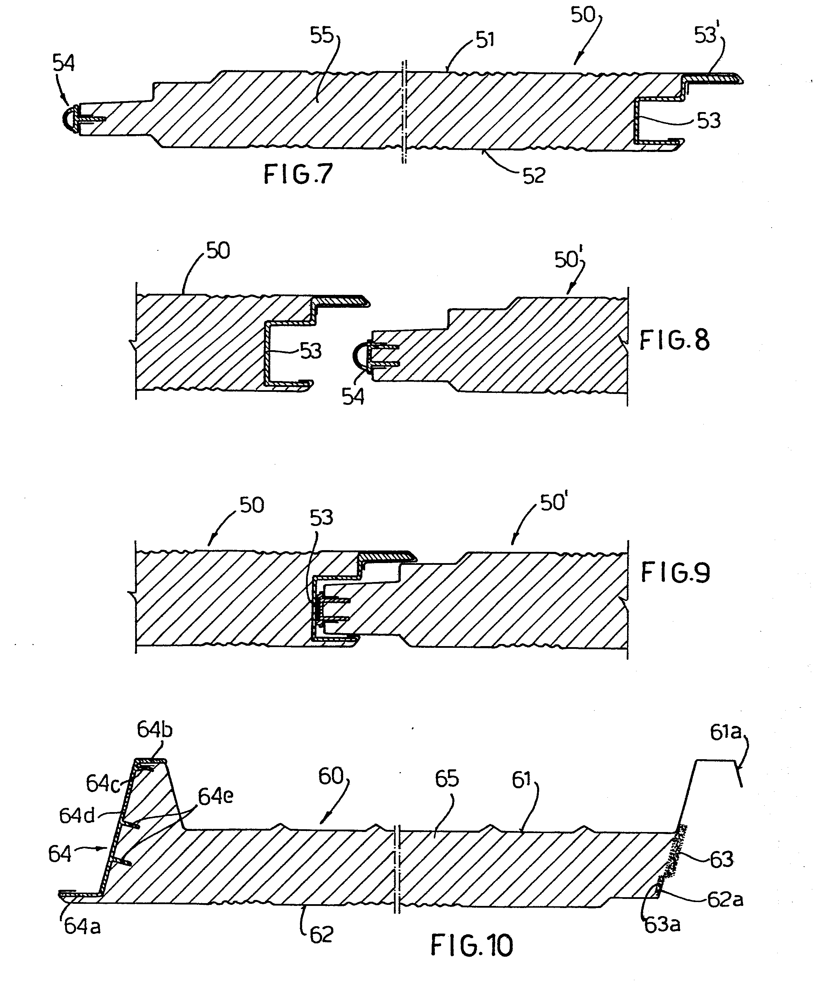

Figs. 4, 5 and 6 show a first type of panel 40, which can be produced by the process of the invention, in a sectional view transversely of the advancement direction as the process is being carried out. Said panel 40 comprises opposite faces 41 and 42 of profiled sheet or plate, side strips 43 and 44, and a filler of foamed material 45. The strip 43 is a C-shaped strip of plastics material and is engaged by the C ends in folded up longitudinal border lips 41a and 42a on the sheet or plate edges. The strip 44 has a substantially rigid portion, including a segment 44a and engagement legs 44b, and a flexible resilient portion 44c of arcuate shape in cross-section. The bands 43 and 44 perform the dual function of protection for the side edges of the panel and connection joint to similar adjacent panels, as shown in Figs. 5 and 6. The side edge of the panel is thinned on the side of strip 44, so that it can be received within the side edge provided with strip 43 of an adjacent panel. The portion 44c of the profiled band 44 is resiliently squeezable for sealing against the profiled band 43 of an adjacent panel.

A panel 50, as shown in Figs. 7 through 9, comprises opposite faces 51 and 52 of profiled sheet or plate, side strips 53 and 54, and a filler of foamed material 55. The side strip 53 is a metal or plastic section of C-shape with an elongated stepped arm 53'. The strip 54 is similar to the above described strip 44, except by having a single engagement leg. The use of strip 54 or 44, with one or two legs, would depend on the panel thickness size. The panel end facing the profiled strip 54 is step thinned. Figs. 8 and 9 show the mutual engagement of two panels 50, 50' with bands 53 and 44, which engagement may be established by self-threading or self-tapping screw.

A panel 60, as shown in Figs. 10 through 12, comprises opposite faces 61 and 62 of profiled sheet or plate, side strips 63 and 64, and a filler of foamed material 65. The sheet or plate 61 is preshaped with a projecting portion 61a for longitudinal overlapping junction, in a manner per se well known. The strip 63 comprises a strap of spongy material which, by a longitudinal edge thereof, is introduced into a folded or raised lip 62a of the sheet or plate 62 and retained there against by the foamed material 65. The opposite longitudinal edge of the strip 63 bears against the sheet or plate 61. The strip 64 comprises a section

having a first arm 64a, a second arm 64b spaced apart from and parallel to said first arm 64a, a resilient arm 64c, a transverse portion 64d for connection between the arms, and ribs 64e for connection to the foamed material. The arm 64a is slipped into beneath a folded longitudinal lip of the sheet or plate 62, while the arms 64c and 64d resiliently engage one folded up lip of the sheet or plate 61.

Figs. 11 and 12 are views showing a joint between two panels 60 and 60' similar to the panel shown in Fig. 10.

Hereinafter, the various steps of the process will be described which are more closely involved with the above described types of panels.

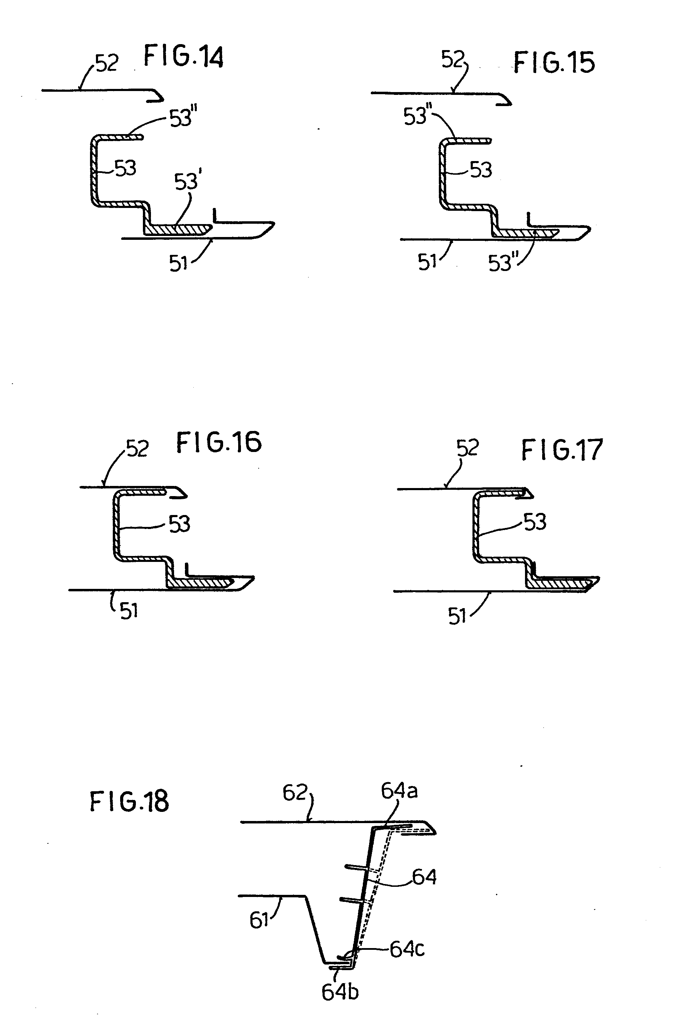

Referring to Fig. 13 and following figures (wherein some reference numerals have been used as those of Figs. 1 through 3 and other reference numerals as those of Figs. 7 through 9), as the continuous side strip 54 is caused to converge to the profiled bands 51 and 52 and inserted therebetween at the edges by means of guides, the continuous side strip 53 is first caused to converge to the side border of the profiled faces 51 and 52, then guided within the space defined by the edges or borders of the two profiled bands, which are still spaced apart from each other, and then is lowered (A) by guides on the lower profiled plate and pushed outwardly from inside to slip the lower end 53' (Fig. 15) and the upper end 53" (Fig. 16) into the folded border lips of bands 51 and 52. Figs. 14 through 17 correspond to the various process steps and locations designated at A, B, C and D in Fig. 13.

The panel 40 is provided by a similar process readily realizable from the above description.

For the panel 60, the strip 63 is guided in its portion 63a to slip the latter within the folded lip 62b of the sheet or plate 62, while at the same time external guide means, or the same shaping belt 26 or 28 support from outside the remainder of said strip 63. The insertion of the strip 64 is explained with reference to Fig. 18, which is drawn over turned relative to Fig. 10, as the configuration of Fig. 18 is preferably used for the realization of said panel 60. The strip 64 is first approached to the sheets or plates 61 and 62 still spaced apart to snap engage the arms 64b and 64c on the folded lip at the border of sheet or plate 61. The strip 64 is then retained through deformation by elasticity thereof to the position shown by full line in Fig. 18, until approachment and lowering of the sheet or plate 62 takes place to the final position. Now, the strip 64 is left free to take the position shown in phantom in Fig. 18, at which position it slips the arm 64a into the folded lip at the border of said sheet or plate 62.

METECNO S.p.A.

20067 TRIBIANO (Milan) Italy


C L A I M S


1.      A process for continuously producing sandwich panels for prefabricated building, comprising the steps of:

(a) continuously advancing first and second bands (10, 12) of profiled sheet or plate, designed to be respectively the lower and upper faces of a continuous band (30) of produced panel, at a same speed, and approaching the same to have a predetermined distance from each other and then maintaining said predetermined distance from each other;

(b) introducing a chemical expandable product (32) between the approaching bands;

(c) causing the expansion or foaming of the chemical product between the approached bands so that said chemical product substantially fills up the gap between said bands and make the latter integral with each other;

(d) simultaneously with said expansion, advancing said bands within a movable press to cause a controlled thickness in the panel band;

characterized by further comprising the steps of:

(e) simultaneously with the advancement of the said first and second bands (10 and 12) at a same speed, advancing first and second side strips (14 and 16), of which at least one is substantially rigid, causing the same to converge to the longitudinal borders of said first and second bands; and

(f) causing the engagement respectively of said first strip with said first and/or second band on one side thereof and engagement of said second strip with said first and/or second band on the other side thereof.

2.    A process as claimed in Claim 1, characterized in that said first strip is a relatively rigid profiled section (43) made of plastics having a C-shape cross-section, and the longitudinal borders of said first and second bands have longitudinal lips folded up on themselves to a sufficient amount for receiving and retaining the ends of the C.

3.    A process as claimed in Claim 1, characterized in that said first strip is a C-shaped section (53) made of relatively rigid plastics material with an elongated arm (53') bent in stepped form, the longitudinal borders of said first and second bands having longitudinal lips folded up on themselves and at offset position relative to one another to receive and retain the ends of the strip arms.

4.    A process as claimed in Claim 1, characterized in that said first strip (64) is a section of plastics material with a cross-sectional shape comprising: a first horizontal arm (64a), a second horizontal arm (64b) extended in opposite direction to said first arm, with a resilient third arm (64c) cooperating with the second arm, and a connection portion (64d) between the arms and skew relative thereto, with ribs (64e) extended therefrom which ribs are to connect to the foamed material.

5.      A process as claimed in Claim 1, <u>characterized in that</u> said second strip is a section of plastics material (44, 54), in cross-section having: a substantially rigid segment (44a) extended in the thickness direction of the panel; on one side of the segment at least one leg (44b) for insertion in the filling foamed material of the panel; on the opposite side of the segment a gasket portion (44c) of arc shape, which is flexible and resilient.

6.      A process as claimed in Claim 1, <u>characterized in that</u> said second strip is a strap of flexible spongy material (63).

7.      A process as claimed in Claim 2 or 3, <u>characterized in that</u> said engagement step is carried out before said expansion step, and comprises the step of advancing for some length said first strip within the space defined between said first and second bands still spaced apart from each other by a larger distance than said predetermined distance; pushing said first band to engaged position with the longitudinal edges of said first and second strips, when said first and second strips are at the approached position thereof.

8.      A process as claimed in Claim 4, <u>characterized in that</u> said engagement step comprises the steps of: advancing said first strip, when said first and second bands are not yet approached to each other to the predetermined distance, to engage said second strip arm and said resilient strip arm on a longitudinal border of one of said bands; resiliently pushing the strip connection portion to a position wherein it does not interfere with the approachment of the second band; releasing the resilient push on the connection portion, so that said first arm is allowed to be arranged within a facing folded      longitudinal border of the second band.

9.      A process as claimed in Claim 6, characterized in that said process further comprises the step of preshaping a longitudinal border of said first and second bands with a raised longitudinal lip, said step of causing the engagement comprising the operation of guiding a longitudinal edge of the strap of spongy material within and against said raised lip.

10.      A process as claimed in Claim 1, further comprising the step of supporting said first and second strips from outside the space defined between the same and said first and second bands during the expansion of the filling chemical product.

11.      A process as claimed in Claim 10, further comprising the step of cutting the continuous band (30) of produced panel to predetermined lengths.

12.      A sandwich type of panel (40) as obtained according to a process as claimed in Claim 1, characterized by comprising two opposite major faces (41, 42) of profiled sheet or plate, a filler (45) of foamed material, and side strips (43, 44) along two opposite side borders, one of said strips (43) having a C-shape and the longitudinal C ends engaged in folded longitudinal lips of said sheets or plates, the other of said strips (44) being of a shape comprising a segment (44a) arranged according to the panel thickness, at least one leg (44b) extended in said foamed material and, on the opposite side to said leg, a resiliently flexible gasket (44c).

13.    A sandwich type of panel (50) obtained according to a process as claimed in Claim 1, characterized by comprising two major faces (51, 52) of profiled sheet or plate and a filler (55) of foamed material there between, a first strip (53) and a second strip (44; 54) on the opposite longitudinal sides of said bands said first strip being of C-shape in cross-section with one C-arm stepwise extended, the longitudinal C ends being received within folded longitudinal lips of said sheet or plate faces, the other of said strips being of a shape comprising a segment arranged according to the panel thickness, at least one leg extended in said foamed material and, on the opposite side of said segment relative to the leg, a longitudinally extended gasket portion of resiliently flexible material.

14.    A sandwich type of panel (60) as obtained according to a process as claimed in Claim 1, comprising two opposite major faces (61, 62) of profiled sheet or plate, a filler (65) of foamed material, and opposite side strips (63, 64) on the opposite longitudinal sides, one of said strips being a strap of spongy material inserted with a longitudinal edge thereof into a folded longitudinal lip of one of said sheets or plates, the other strip having a cross-sectional shape comprising two opposite parallel arms (64a, 64b) connected by an intermediate skew portion (64d), a third resilient arm (64c) cooperating with one of said arms for snap application of said strip on a longitudinal border of one of said sheets or plates.

FIG.1

FIG.2

FIG.3

FIG.4

FIG.5

FIG.6

FIG.7

FIG.8

FIG.9

FIG.10

FIG.11

FIG.12

FIG.13

FIG.14

52

53"

53

53'

51

FIG.15

52

53"

53

51

53"

FIG.16

52

53

51

FIG.17

52

53

51

FIG.18

62

64a

64

61

64c

64b